# EUROPÄISCHE PATENTANMELDUNG

(11) **EP 0 994 545 A2**
(43) Veröffentlichungstag der Anmeldung: **19.04.2000**
(21) Anmeldenummer: 99250360.7
(22) Anmeldetag: 12.10.1999
(51) Int. Cl.: H02H 1/06

(54) **Schaltungsanordnung zur Ansteuerung eines Auslösers**

(30) Priorität: 16.10.1998 DE 19849296
(71) Anmelder: SIEMENS AKTIENGESELLSCHAFT, 80333 München (DE)
(72) Erfinder: Bürger, Jens, 16321 Bernau (DE); Schuckar, Detlev, 12355 Berlin (DE)

(57) **Zusammenfassung**

Schaltungsanordnung zur Ansteuerung eines elektromechanischen Auslösers (1) für einen elektrischen Schalter (14) mit einer digitalen Steuereinrichtung (2), die im Falle des Ausfalls der Speisespannung mittels einer Spannungsversorgungseinrichtung (4) betreibbar ist, die ihre Betriebsenergie aus einem eingehenden Schaltkommando bezieht.

## Beschreibung

Die Erfindung bezieht sich auf eine Schaltungsanordnung zur Ansteuerung eines elektromechanischen Auslösers für einen elektrischen Schalter mit einer digitalen Steuereinrichtung, die mittels einer Speisespannung betreibbar ist und die in Abhängigkeit von der Schaltbereitschaft ein eingehendes Schaltkommando dem Auslöser zuleitet.

Derartige Schaltungsanordnungen zur Ansteuerung eines Auslösers sind, auch mit digitalem Aufbau, grundsätzlich bekannt.

Eine derartige Schaltungsanordnung hat unter anderem die Aufgabe, beim Eingehen eines Schaltkommandos in Abhängigkeit von der Schaltbereitschaft des anzusteuernden Schalters den Auslöser zu betätigen bzw. die Betätigung zu sperren. Zu diesem Zweck ist es bei nicht digitalen Schaltungsanordnungen üblich, in eine elektrische Verbindungsleitung, über die das Schaltkommando übertragen wird, Unterbrechungsstellen einzubauen, an denen jeweils eine Unterbrechung der Verbindungsleitung stattfindet, wenn ein bestimmter Parameter, der von einem Sensor im Bereich des Schalters erfaßt wird, einen Wert annimmt, der die fehlende Schaltbereitschaft des Schalters signalisiert.

Bei digitalen Steuereinrichtungen ist eine derartige Schaltungsanordnung nicht verwendbar. Ein Schaltkommando wird grundsätzlich bis zu der digitalen Steuereinrichtung geleitet, die andererseits gegebenenfalls von Sensoren erfaßte Meßwerte verarbeitet und in Abhängigkeit von diesen Meßwerten das Schaltkommando zum Auslöser weiterleitet.

Dabei stellt sich das Problem, daß bei einem Ausfall der Speisespannung die Steuereinrichtung nicht betriebsfähig ist und insbesondere die erfaßten Meßwerte nicht verarbeiten kann.

Der vorliegenden Erfindung liegt daher die Aufgabe zugrunde, eine Schaltungsanordnung der eingangs genannten Art zu schaffen, die bei Ausfall der Speisespannung betreibbar ist.

Die Aufgabe wird erfindungsgemäß dadurch gelöst, daß eine Spannungsversorgungseinrichtung vorgesehen ist, durch die im Bedarfsfall die Steuereinrichtung betreibbar ist und die ihre Betriebsenergie aus einem eingehenden Schaltkommando bezieht.

Da das Schaltkommando in jedem Fall, auch bei ausgefallener Speisespannung, bis zu der digitalen Steuereinrichtung geleitet wird, steht grundsätzlich bei Eingehen eines Schaltkommandos ein elektrisches Signal zur Verfügung, das gemäß der Erfindung zum Betreiben einer Spannungsversorgungseinrichtung verwendet wird, die ihrerseits die Steuereinrichtung speist. Nachdem die Spannungsversorgungseinrichtung die notwendige Betriebsenergie an die Steuereinrichtung geleitet hat, kann diese betrieben werden und gegebenenfalls ein Schaltkommando zum Auslöser weiterleiten.

In Abhängigkeit von der Energiemenge, die die Spannungsversorgungseinrichtung zum Betreiben der Steuereinrichtung benötigt, sind gegebenenfalls mehrere oder länger andauernde Schaltkommandosignale notwendig.

Eine vorteilhafte Ausgestaltung der Erfindung sieht vor, daß ein Kondensatornotauslösegerät vorgesehen ist, das mittels eines Not-Schalters mit der Steuereinrichtung verbindbar ist.

Ein Kondensatornotauslösegerät enthält einen Kondensator, der im Normalfall aufgeladen ist und die gespeicherte Ladung während des Ausfalls der Speisespannung über längere Zeit hält. Das Kondensatornotauslösegerät kann dann mittels des Not-Schalters, beispielsweise von Hand, mit der Steuereinrichtung verbunden werden, wobei gleichzeitig die Spannungsversorgungseinrichtung direkt oder mittels der Steuereinrichtung mit dem Kondensatornotauslösegerät verbunden wird.

Der Not-Schalter muß dann nötigenfalls solange gedrückt werden, bis das Schaltkommando zur Betätigung des Auslösers führt.

Eine weitere vorteilhafte Ausgestaltung der Erfindung sieht vor, daß mit der Steuereinrichtung wenigstens ein Sensor verbunden ist, der im Bereich des Schalters Meßwerte erfaßt und daß die Steuereinrichtung eine Entscheidungseinrichtung zur Ermittlung der Schaltbereitschaft aufgrund der erfaßten Meßwerte aufweist.

Derartige Sensoren können beispielsweise Gasdichtesensoren, zum Beispiel für das Löschgas (SF₆), Gasdrucksensoren, Temperatursensoren, Hydraulikdrucksensoren oder Anzeiger für die Schalterstellung (Meldeschalter) sein.

Im folgenden wird die Erfindung anhand eines Ausführungsbeispiels in einer Zeichnung gezeigt und anschließend beschrieben.

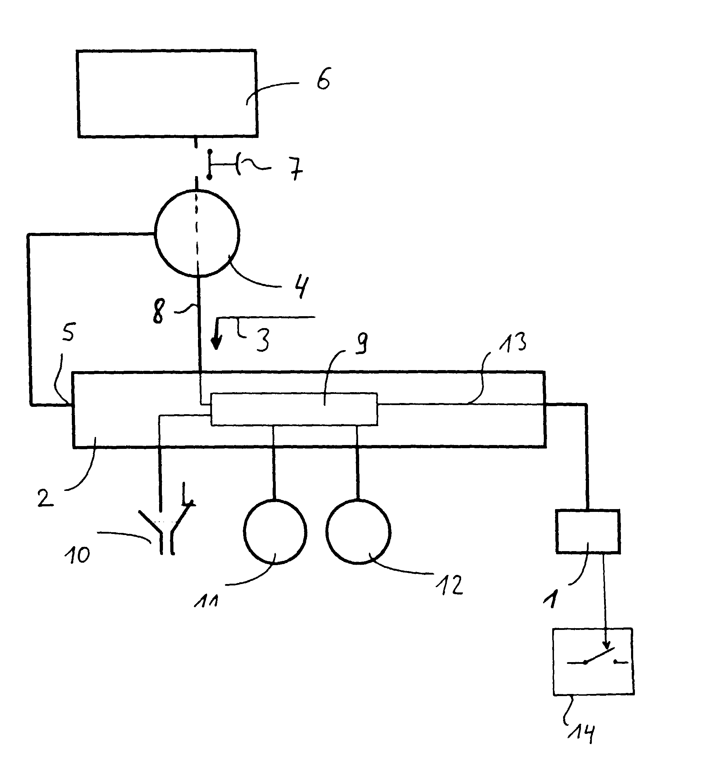

Dabei zeigt die Figur schematisch eine erfindungsgemäße Schaltungsanordnung.

In der Figur ist eine Schaltungsanordnung zur Ansteuerung eines elektromechanischen Auslösers 1 dargestellt mit einer digitalen Steuereinrichtung 2, die im Normalfall mittels einer nicht näher dargestellten Einrichtung mit einer Speisespannung betreibbar ist und die bei Vorliegen der Schaltbereitschaft des Schalters 14, der nur schematisch dargestellt ist, ein eingehendes Schaltkommando 3 dem Auslöser 1 zuleitet.

Fällt die Speisespannung aus, so kann die digitale Steuereinrichtung 2 zunächst nicht betrieben werden. Ein Notbetrieb ist mittels einer Spannungsversorgungseinrichtung 4 möglich, die ihre Energie aus dem eingehenden Schaltkommando bezieht und diese in einen Speiseeingang 5 der digitalen Steuereinrichtung 2 einleitet.

Im vorliegenden Beispiel ist ein Kondensatornotauslösegerät 6 vorgesehen, das mittels eines Not-Schalters 7 mit der digitalen Steuereinrichtung 2 und der Spannungsversorgungseinrichtung 4 verbindbar ist. In dem Kondensatornotauslösegerät ist innerhalb eines Kondensators elektrische Energie gespeichert, die mittels der Spannungsversorgungseinrichtung 4 zum Betreiben der digitalen Steuereinrichtung 2 verwendet wird. Zu diesem Zweck wird ein Schaltkommando über die Leitung 8 abgegeben, solange der Not-Schalter 7 betätigt wird (von Hand). Wenn die Versorgungsspannung an dem Anschluß 5 zum Betrieb der digitalen Steuereinrichtung 2 ausreicht, kann innerhalb der Steuereinrichtung 2 eine Entscheidungseinrichtung 9, die von Sensoren 10 (Meldeschalter) 11 (SF₆-Dichtewächter) und 12 (Temperaturmeßgerät) erfaßten Meßwerte auswerten und in Abhängigkeit von den Meßwerten entscheiden, ob die Schaltbereitschaft vorliegt.

Ist dies der Fall, so wird über die Leitung 13 das anstehende Schaltkommando zu dem Auslöser 1 weitergeleitet.

Grundsätzlich kann die Schaltungsanordnung auch so ausgelegt sein, daß anstelle des Schaltkommandos, das durch das Kondensatornotauslösegerät erzeugt wird, ein übliches Schaltkommando von einem Schutzgerät ausreicht, um mittels der Spannungsversorgungseinrichtung 4 die digitale Steuereinrichtung 2 zu betreiben und gegebenenfalls den Auslöser zu betätigen. Hierzu ist es denkbar, bei der digitalen Steuereinrichtung einen Betriebsmodus zu schaffen, in dem die Steuereinrichtung mit geringer Versorgungsspannung funktioniert bzw. sehr schnell in Betrieb nehmbar ist, ohne daß beispielsweise bei der Inbetriebnahme bestimmte digitale Bausteine überprüft werden.

## Patentansprüche

1. Schaltungsanordnung zur Ansteuerung eines elektromechanischen Auslösers (1) für einen elektrischen Schalter (14) mit einer digitalen Steuereinrichtung (2), die mittels einer Speisespannung betreibbar ist und die in Abhängigkeit von der Schaltbereitschaft ein eingehendes Schaltkommando dem Auslöser (1) zuleitet,
**dadurch gekennzeichnet,**
daß eine Spannungsversorgungseinrichtung (4) vorgesehen ist, durch die im Bedarfsfall die Steuereinrichtung (2) betreibbar ist und die ihre Betriebsenergie aus einem eingehenden Schaltkommando bezieht.

2. Schaltungsanordnung nach Anspruch 1,
**dadurch gekennzeichnet,**
daß ein Kondensatornotauslösegerät (6) vorgesehen ist, das mittels eines Not-Schalters (7) mit der Steuereinrichtung (2) verbindbar ist.

3. Schaltungsanordnung nach Anspruch 1 oder 2,
**dadurch gekennzeichnet,**
daß mit der Steuereinrichtung (2) wenigstens ein Sensor (10,11,12) verbunden ist, der im Bereich des Schalters (14) Meßwerte erfaßt und daß die Steuereinrichtung (2) eine Entscheidungseinrichtung (9) zur Ermittlung der Schaltbereitschaft aufgrund der erfaßten Meßwerte aufweist.
